# EUROPÄISCHE PATENTSCHRIFT

(11) **EP 1 645 399 B1**
(45) Veröffentlichungstag und Bekanntmachung des Hinweises auf die Patenterteilung: **14.05.2008**
(21) Anmeldenummer: 05004510.3
(22) Anmeldetag: 02.03.2005
(51) Int. Cl.: B29C 51/26

(54) **Verfahren und Vorrichtung zum Herstellen von Kunststoff enthaltenden Produkten**
Method and apparatus for manufacturing plastic articles
Méthode et appareil pour la manifacture d'articles en plastique

(30) Priorität: 19.07.2004 DE 102004034792
(43) Veröffentlichungstag der Anmeldung: 12.04.2006
(73) Patentinhaber: R+S Technik GmbH, 63073 Offenbach am Main (DE)
(72) Erfinder: Spengler, Gerhard, 60388 Frankfurt (DE)
(74) Vertreter: Patentanwälte Buse, Mentzel, Ludewig

(56) Entgegenhaltungen:
- EP-A- 1 097 794
- EP-A- 1 211 051
- DE-A1- 3 607 647
- DE-A1- 19 829 352
- US-A- 6 136 415
- US-A1- 2003 041 955

## Beschreibung

Die Erfindung betrifft ein Verfahren und eine Vorrichtung zum Herstellen von Kunststoff enthaltenden Produkten mit den Merkmalen der Oberbegriffe der Patentansprüche 1 und 4.

Verfahren und Vorrichtungen zum Herstellen von im Ausgangszustand mehrlagigen Produkten aus Teilstücken von Bahnen oder Matten, die mindestens zum Teil als thermoplastischen Schmelzkleber dienende Kunststoffasern und andere, als Armierung oder Füllstoff dienende Fasern enthalten, sind in mehrfacher Weise bekannt. Dazu gehört nicht nur die US 6,214,157, sondern auch eine Vielzahl anderer, ähnliche Verfahren und Vorrichtungen beschreibende Druckschriften. Andere Verfahren werden in den Druckschriften US 5 199 595 und US 3 115 678 gezeigt.

Verwendet werden das hier interessierende Verfahren und die zugehörige Vorrichtung vor allem zur Herstellung von Verkleidungsteilen und insbesondere von Innenverkleidungsteilen für Kraftfahrzeuge. Dort werden bei der Herstellung der hier interessierenden Produkte in der Regel mehrere, einen sandwichartigen Rohling bildende Lagen nach ausreichender Erwärmung mit dem notwendigen Druck verformt und miteinander verbunden, wobei als Verbindungsmittel die thermoplastischen Kunststoffasern als Schmelzkleber dienen. Die Verarbeitungstemperatur liegt dabei in der Größenordnung von ca. 200° C.

Die einzelnen Lagen des sandwichartigen Rohlings sind zum Beispiel eine Trageschicht, die im Ausgangszustand thermoplastische Kunststoffasern (zum Beispiel Polypropylen) als Schmelzkleber und vorzugsweise Naturfasern oder auch andere Fasern als Armierung enthält. Zu den als Armierung dienenden Fasern können auch bei höherer Temperatur schmelzende Kunststoffasern wie zum Beispiel Polyestherfasern gehören.

Andere Lagen des sandwichartigen Rohlings können gemäß Ausführungsbeispiel eine Schaumstoffschicht und/oder eine Dekorschicht sein. Das Wesen der Erfindung ist aber nicht auf diese beziehungsweise auf eine bestimmte Anzahl von Lagen beschränkt.

Die zur Verarbeitung derartiger sandwichartiger Rohlinge dienende Vorrichtung weist mindestens ein Maschinengestell und relativ zueinander bewegbar mindestens eine obere Werkzeughälfte und eine untere Werkzeughälfte sowie Antriebselemente für die besagten Werkzeuge und ausserdem mindestens eine Steuereinrichtung zum Steuern der Antriebselemente auf. Ferner umfaßt die bekannte Vorrichtung mindestens einen Spannrahmen, der den sandwichartigen Rohling von einer diesen zur Vorrichtung transportierenden Transport- und Greifeinrichtung übernimmt und vor dem eigentlichen Herstellungsvorgang in die richtige Position bringt und in dieser hält.

Charakteristisch für das besagte Verfahren und die derzeit benutzten Vorrichtungen der genannten Art ist, daß der erforderliche Randabfall sehr groß ist. Bei großflächigen Teilen ist der relative Anteil des Randabfalles noch verhältnismäßig gering. Gravierend ist der Randabfall jedoch bei verhältnismäßig langen und nicht sehr breiten bzw. schmalen Teilen.

Darüber hinaus ist bei den hier interessierenden Vorrichtungen der Platzbedarf für die Spannrahmen grundsätzlich berächtlich und immer gleich groß, unabhängig davon, ob es sich um die Herstellung von großflächigen oder von kleinflächigen Produkten handelt. Eine Folge dieser Tatsache ist ferner, daß die Gesamtvorrichtung, insbesondere wenn sie mehrere Arbeitsplätze aufweist, unverhältnismäßig lang zur Länge der insgesamt hergestellten Produkte ist.

Der Erfindung liegt daher die Aufgabe zugrunde, bei einem Verfahren und einer Vorrichtung der hier interessierenden Art den Abfall zu minimieren und die Maschine bzw. das zur Herstellung dienende Werkzeug zu optimieren.

Zur Lösung dieser Aufgabe sieht die Erfindung mit den Merkmalen des kennzeichnenden Teiles des Verfahrensanspruches vor, daß der sandwichartige Rohling zu Beginn des Herstellungsvorganges von die Randbereiche des Produktes formenden Randformen der aus Kernformen und Randfor-men bestehenden Werkzeughälften spannrahmenartig zunächst mit einer Schlupfmöglichkeit für den sandwichartigen Rohling gehalten und gegebenenfalls bereits vorgeformt wird und daß schließlich die Randbereiche von den Randformen ebenso wie der Kernbereich von Kernformen mit Wärme und Druck produktgerecht geformt werden.

Die besagten Verfahrensschritte gestatten es, auf einen Spannrahmen zum Halten des sandwichartigen Rohlings vor Beginn des Herstellungsvorganges völlig zu verzichten. An seine Stelle treten Teile des Formwerkzeuges, die den Rohling zunächst mit Schlupf halten und dann - soweit erforderlich - im Randbereich zur Herstellung des endgültigen Produktes verformen. Dabei können auch verschiedene Randbereiche zum Beispiel auf unterschiedlichem Höhenniveau liegen.

Die Konsequenz aus dieser Arbeitsweise ist, daß der Abfall nur noch minimal ist und daß auf die Verwendung eines Spannrahmens vollständig verzichtet werden kann.

Bei der Vorrichtung weisen die obere oder erste Werkzeughälfte erfindungsgemäß eine obere Kernform und getrennt davon mindestens eine obere Randform und die untere oder zweite Werkzeughälfte eine untere Kernform und getrennt davon mindestens eine untere Randform auf. Die Ansteuerung der Antriebselemente zum Bewegen der Kernformen und der Randformen ist derart, daß die Kernformen zum Formen des Kernbereiches des/der Produktes dienen und daß die Randformen zunächst die Funktion eines Spannrahmens und gegebenenfalls eine Funktion zum Vorformen von Randbereichen des Produktes aufweisen und zum Abschluß des Herstellungsvorganges eine Funktion zum Fertigformen der Randbereiche des Produktes besitzen. Der dann noch vorhandene Randabfall ist minimal gering und besteht nur noch aus einem zur Sicherheit vorgesehenen, geringfügigen Übermaß gegenüber dem Fertigprodukt. Ein gewisses Übermaß ist allerdings notwendig, weil Werkstoff vom Randbereich während des dreidimensionalen Verformens des sandwichartigen Rohlings zum Kernbereich hin gleiten muß, wie dies auch bei einer auf einem Tisch flach aufliegenden Decke der Fall ist, wenn diese in eine in der Mitte des Tisches befindliche Vertiefung gedrückt wird.

Eine ohne Spannrahmen arbeitende Vorrichtung ist deutlich kleiner als die bekannten Vorrichtungen dieser Art mit Spannrahmen und weist verschiedene Vorteile auf. Dazu gehören ein geringerer Platzbedarf oder eine größere Anzahl der gleichzeitig herstellbaren Produkte.

Die Erfindung wird nachstehend anhand von Ausführungsbeispielen, die in den Figuren schematisch dargestellt sind, näher erläutert. Dabei zeigen:
- Fig. 1:: schematisch eine Darstellung von wesentlichen Teilen der Vorrichtung;
- Fig. 2:: in kleinerem Maßstab eine Ansicht ähnlich der in Fig. 1 von einem geringfügig abgewandelten Ausführungsbeispiel;
- Fig. 3:: in nochmals kleinerem Maßstab die Vorrichtung wie in Fig. 2 mit einem geöffneten Werkzeug;
- Fig. 4:: eine Darstellung der Vorrichtung wie in Fig. 3 mit einem geschlossenen Werkzeug und
- Fig. 5:: eine Darstellung wie in den Fig. 3 und 4 mit dem Werkzeug in der Produktions-Endstellung.

Eine Vorrichtung 1 zum Herstellen von Verkleidungsteilen und insbesondere von Innenverkleidungsteilen für Kraftfahrzeuge oder auch von anderen Produkten umfaßt ein in den Fig. nicht dargestelltes Maschinengestell, in dem eine mehrteilige, obere oder erste Werkzeughälfte 2 und eine mehrteilige untere oder zweite Werkzeughälfte 3 relativ zueinander bewegbar sind. Hierzu dienen nicht dargestellte, jeweils eigene Antriebselemente, die durch Pfeile 4 - 7 symbolisiert sind und von einer ebenfalls nicht dargestellten Steuereinrichtung angesteuert werden.

Gemäß den in den Figuren dargestellten Ausführungsbeispielen umfaßt die obere Werkzeughälfte 2 eine obere Kernform 8 und getrennt davon mindestens eine obere Randform 9, 9' und die untere Werkzeughälfte 3 umfaßt eine untere Kernform 10 und getrennt davon mindestens eine untere Randform 11, 11'. Ebenso wie die Werkzeughälften 2 und 3 grundsätzlich relativ zueinander bewegbar sind, gilt dies auch für die obere Kernform 8 und die zugehörige obere Randform 9, 9' sowie für die untere Kernform 10 und die zugehörige untere Randform 11, 11`.

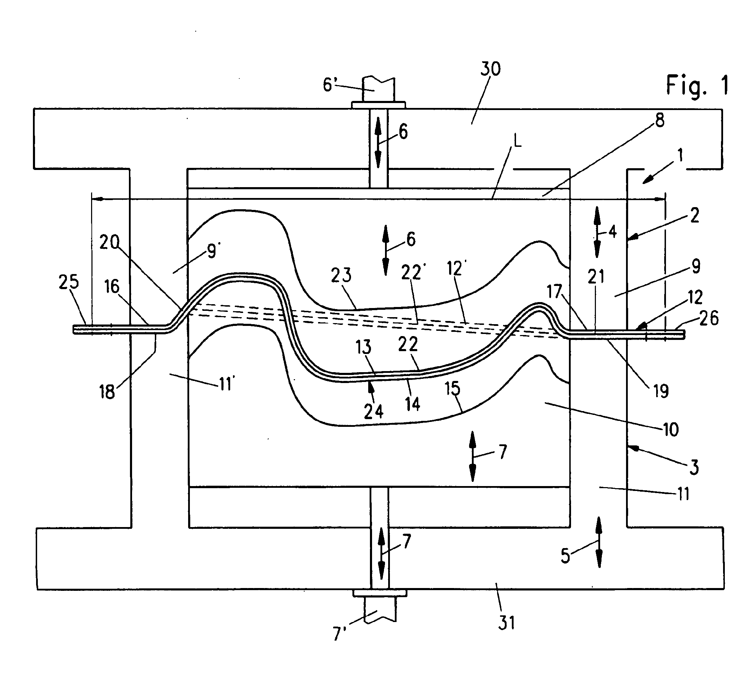

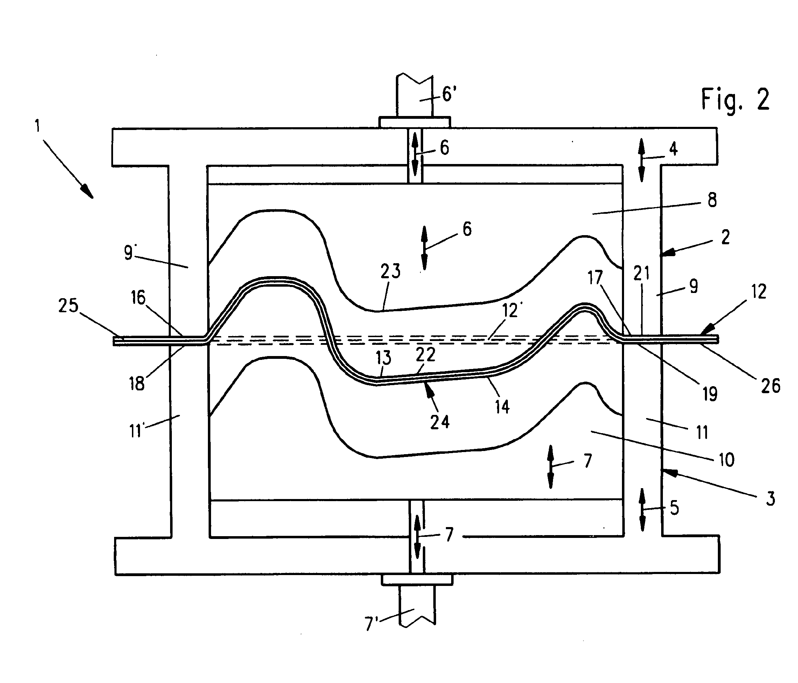

Die Randformen 9, 9' und 11, 11' sind jeweils im Randbereich der herzustellenden Produkte wirksam und schließen bezüglich Lage und wirksamer Form und Funktion in der Schließstellung an die Form und Gestalt der Kernformen 8, 10 an. Grundsätzlich treffen die Randformen 9, 9' und 11, 11' gemäß Ausführungsbeispiel in ihrer Funktion als Spannrahmen deutlich eher auf den zu bearbeitenden Rohling 12, 12' als die Kernformen 8 und 10 wie die Fig. 1 und 2 zeigen.

Zuerst muß die Spannrahmenfunktion der Randformen 9, 9' und 11, 11' in Kraft treten, ehe die Kernformen 8, 10 wirksam werden können, wobei alle Funktionen sowohl aus Fig. 1 als auch aus Fig. 2 ersichtlich sind.

Das als Doppelpfeil angegebene Antriebselement 4 dient als Antrieb für die obere Randform 9, 9', während das als Doppelpfeil angegebene Antriebselement 5 als Antrieb für die untere Randform 11, 11' vorgesehen ist. Die als Doppelpfeile angegebenen Antriebselemente 6 und 7 dienen zur Erzeugung der Relativbewegungen der oberen Kernform 8 und der unteren Kernform 10 sowohl in Öffnungsrichtung als auch in Schließrichtung des aus oberer Werkzeughälfte 2 und unterer Werkzeughälfte 3 bestehenden Werkzeuges (Fig. 1). Einzelheiten des Antriebselementes 4 für die obere Randform 9, 9' und des Antriebselementes 6 für die obere Kernform 8 sowie des Antriebselementes 5 für die untere Randform 11, 11' und des Antriebselementes 7 für die untere Kernform 10 sind in Fig. 1 der besseren Übersicht wegen nicht dargestellt und daher nur mit Hilfe von Doppelpfeilen prinzipmäßig veranschaulicht.

Die Vorrichtung 1 dient mit ihrer oberen Werkzeughälfte 2 und der unteren Werkzeughälfte 3 zum Verformen eines mehrlagigen und gemäß Ausführungsbeispiel zweilagig dargestellten, sandwichartigen Rohlings 12, der im Ausgangszustand gemäß der gestrichelten Darstellung 12' in Fig. 1 im wesentlichen flach ist. Der Rohling 12, 12' besteht gemäß Ausführungsbeispiel aus zwei Lagen 13 und 14, wobei die eine Lage 13 eine Dekorschicht und die andere Lage 14 zum Beispiel eine in ihrem Ausgangszustand mehrlagige Trageschicht sein können.

Mindestens die als Trageschicht dienende Lage 14 ist im Ausgangszustand bahn- bzw. mattenförmig und weist zugleich als Schmelzkleber dienende thermoplastische Kunststoffaser und ggf. weitere als Armierung oder Füllstoff dienende Fasern auf. Die als Dekorschicht dienende Lage 13 kann aus jedem üblichem Werkstoff bestehen.

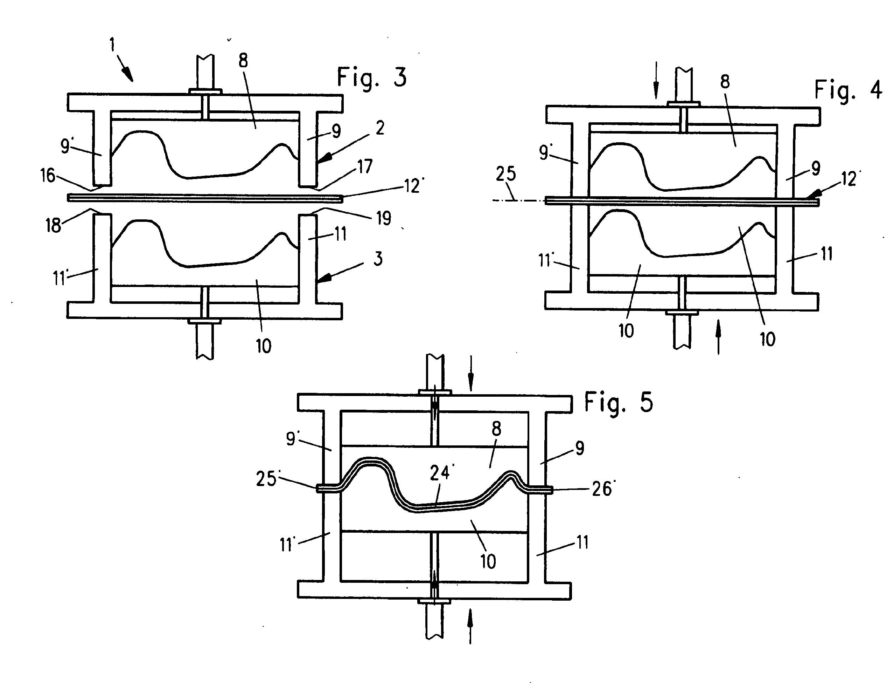

Zu Beginn eines Arbeitsganges sind die beiden Werkzeughälften 2 und 3 auseinandergefahren, so daß der im wesentlichen ebene Rohling 12 von einer in Fig. 3 nicht dargestellten Transport- und Greifeinrichtung zwischen die beiden Werkzeughälften 2 und 3 transportiert und an die Randformen 9, 9' bzw. 11, 11' übergeben werden kann.

Daraufhin schließt das Werkzeug (Fig. 4), wobei die oberen und die unteren Randformen 9, 9' und 11, 11' den Rohling 12' von der nicht dargestellten Transport- und Greifeinrichtung übernehmen. Sobald der Rohling 12' von der Transport- und Greifeinrichtung freigegeben ist, wird er nur noch von den Randformen 9, 9' und 11, 11' gehalten. Wenn der Rohling 12' zwi-schen den unteren und oberen Randformen 9, 9' und 11, 11' gehalten wird, ist die untere Kernform 10 mit allen Erhebungen längs ihrer Kontur sowie mit ausreichend Abstand unterhalb des zwischen der oberen Rand- form 9, 9' und der unteren Randform 11, 11' eingepannten Rohlings 12' angeordnet (Fig. 4). Zum Einspannen des Rohlings 12' wird die obere Randform 9 aus ihrer in Fig. 3 dargestellten Ruheposition abgesenkt, so daß ihre wirksamen Oberflächen 16 und 17 (Fig. 1) den Rohling 12' auf den zugehörigen Oberflächen 18 und 19 der unteren Randform 11, 11' halten. Es versteht sich aber, daß die oberen Randformen 9, 9' und die unteren Randformen 11, 11' auch gleichzeitig oder überwiegend oder voll-ständig nur die eine oder andere Randform zum Einspannen des Rohlings 12' bewegbar sein können, wobei dies von der Form und Gestalt des herzustellenden Produktes bzw. von der Form und Gestalt der oberen Kernform 8 und der unteren Kernform 10 abhängt.

Die Andruckkraft, mit der die Randformen 9, 9' und 11, 11' den Rohling 12' halten, entspricht grundsätzlich der Haltekraft, mit der auch ein üblicher Spannrahmen den Rohling halten würde. Dies bedeutet, daß randseitig bei Bedarf Werkstoff des Rohlings nachgleiten kann und ein herstellungstechnisch erforderlicher Schlupf möglich ist.

Darüber hinaus wird die Andruckkraft noch so gewählt, daß bei Bedarf bereits eine gewisse Verformung des Rohlings 12' in seinem Randbereich 20 (Fig. 1) erfolgen kann, wobei aber im Übrigen sowohl der mindestens schon vorzuformende Randbereich 20 als auch der andere Randbereich 21 entsprechend der gesamten Kontur des Rohlings 12 im erforderlichen Umfang zwischen den Randformen 9, 9' und 11, 11' nachgleiten können. Der hier erforderliche Schlupf muß auf jeden Fall gewährleistet sein.

Ebenso wie die untere Kernform 10 befindet sich auch die obere Kernform 8 im Ausgangszustand in deutlichem Abstand von dem zwischen den Randformen 9 und 11 gemäß den gestrichelten Linie eingespannten Rohling 12'.

Zum Formen des Kernbereiches 22 entsprechend den Konturen der wirksamen Oberflächen 15 der unteren Kernform 10 und der wirksamen Oberfläche 23 der oberen Kernform werden die Kernformen 8 und 10 in die Schließposition verfahren, wobei der Rohling 12' seine in den Figuren 1, 2 und 5 dargestellte Form entsprechend dem fertiggestellten·Produkt 24 erhält. Zugleich werden auch die Randformen 9 und 11 in ihre Produkt-Schließanlage bewegt, wie dies ebenfalls in den Figuren 1, 2 und 5 dargestellt ist.

Der Vollständigkeit halber sowie rein prinzipmäßig ist in Fig. 1 auch die Länge L des sandwichartigen Rohlings 12' als Abwicklung der Oberfläche des herzustellenden Produktes 24 vor Beginn des wirksamen Umform- und Verbindungsvorganges angegeben. Rein vorsorglich sind ferner auf jeder Seite zusätzlich einige Längeneinheiten aus Sicherheitsgründen vorgesehen.

Mit der Vorrichtung 1 werden bevorzugt Produkte 24 hergestellt, deren Rohling 12' eine als Trageschicht dienende Lage 14 umfaßt. Diese Trageschicht ist ein Teilstück und im Ausgangszustand selbst bahn- bzw. mattenförmig und weist als Schmelzkleber dienende, thermoplastische Kunststoffasern und gegebenenfalls weitere, als Armierung oder Füllstoff dienende Fasern auf. Diese Trageschicht ist gegebenfalls ihrerseits mehrlagig und wird in einer der Vorrichtung 1 vorgeschalteten Station derart erwärmt und vorbereitet, daß sie sodann in der Vorrichtung 1 zusammen mit mindestens einer weiteren Lage 13 unter Verwendung von Wärme und Druck zu dem Produkt 24 verarbeitet werden kann.

Während des Herstellungsvorganges mit der Vorrichtung 1 gleiten die Randteile 25 und 26 des Rohlings 12', die außen über die Randformen 9, 9' und 11, 11' vorstehen, weitgehend bei der Formgebung des Kernbereiches 22 des Produktes 24 in Richtung der Kernformen 8 und 10, so daß nach der Herstellung des Produktes 24 nur noch ein sehr geringer Randüberstand 25' bzw. 26' (Fig. 5) außerhalb der Randfor-men 9, 9' und 11, 11' vorhanden ist. Nur dieser Randüberstand 25' und 26' ist dann noch abzutrennender Abfall, wobei die Trennflächen gegebenenfalls auch im Bereich der wirksamen Oberflächen 16 und 18 beziehungsweise 17 und 19 der Randformen 9, 9' und 11, 11' liegen können.

Dieser Abfall wird zur Fertigstellung des Produktes 24 mit Hilfe einer in den Figuren nicht dargestellten Stanz-Trenn- bzw. Schneideinrichtung entfernt.

Die in den Figuren 1 bis 5 dargestellten Ausführungsbeispiele arbeiten grundsätzlich in gleicher Art und Weise, so daß zur Herstellung der Produkte 24 jeweils dasselbe Verfahren angewandt wird. Ein Unterschied besteht jedoch bezüglich der Form und Gestalt der herzustellenden Produkte 24 gemäß Fig. 1 und 24' gemäß den Fig. 2 bis 5. Während das Niveau der wirksamen Oberflächen 16 bis 19 der Randformen 9, 9' und 11, 11' im Falle der Ausführungsform nach den Figuren 2 bis 5 in der Schließstellung der Randformen 9, 9' und 11, 11' gemäß den Fig. 4 und 5 in einer einzigen horizontalen Ebene 25 bzw. parallel dazu liegt (Fig. 4), ist dies bei der Ausführungsform gemäß Fig. 1 nicht zwingend der Fall.

Gemäß Fig. 1 liegt der Rohling 12' mit seinem Kernbereich 22' bereits in der Schließstellung der Randform 9, 9' und 11, 11' schräg zur Horizontalen. Ferner weisen die wirksamen Oberflächen 16 und 18 der beiden links in Fig. 1 dargestellten Randformen 9' und 11' eine von einer ebenen Fläche abweichende Kontur auf, so daß der Randbereich 20 des herzustellenden Produktes 24 während des Halte- und Herstellungsvorganges entsprechend vorgeformt und fertiggeformt wird. Diese den wirksamen Ober-flächen 16 und 20 entsprechende Gestaltung erhält der Rohling 12' nicht erst beim Fertigformen, wenn sich die Randformen 9, 9' und 11, 11' zusammen mit den Kernformen 8, 10 vollständig geschlossen haben, sondern bereits teilweise während der Haltephase der Randformen 9, 9' und 11, 11', wenn auch noch ein gewisser Schlupf entsprechend der Spannrahmenfunktion notwendig und möglich ist.

Die Erfindung ist daher nicht auf in den Fig. nur schematisch dargestellten Ausführungsbeispiele beschränkt, vielmehr sind noch mannigfache Abwandlungen und Ergänzungen denkbar, ohne von dem grundsätzlichen Erfindungsgedanken abzuweichen. Dazu gehört insbesondere auch, daß alle zum erforderlichen Erwärmen des Rohlings 12 und zum anschließenden Abkühlen erforderlichen Einrichtungen in den Figuren nicht dargestellt sind.

Ferner sind auch zum Beispiel zu den Kernformen 8, 10 und zu den Randformen 9, 9' und 11, 11' gehörende Führungsflächen vorgesehen, so daß eine gegenseitige Abstützung und Führung gegeben sind.

Schließlich können die Hubantriebe 6' und 7', bei denen es sich zum Beispiel um Kolben-Zylinder-Einrichtungen handeln kann, unmittelbar an einem die Randformen 9, 9' und 11, 11' tragenden Element 30 bzw. 31 angeordnet und zusammen mit diesem bewegbar und bis in eine Arbeits-Ausgangsposition gemäß den Fig. 1 und 4 sowie entsprechend zurückstellbar sein.

## Patentansprüche

1. Verfahren zum Herstellen von Produkten wie Verkleidungsteilen und insbesondere von Innenverkleidungsteilen für Kraftfahrzeuge mit Hilfe von Wärme und Druck, wobei ein mehrlagiger, mindestens zweilagiger, sandwichartiger Rohling (12, 12') mit Hilfe von mindestens einer ersten oder oberen Werkzeughälfte (2) und einer zweiten oder unteren Werkzeughälfte (3) verformt wird, die relativ zueinander in einem Maschinengestell unter Verwendung von Antriebselementen (4 - 7) und einer Steuereinrichtung bewegt werden,
**dadurch gekennzeichnet,**
**daß** der sandwichartige Rohling (12') zu Beginn des Herstellungsvorganges im Randbereich (20, 21) des Produktes (24) von Randformen (9, 11) der aus Kernformen (8, 10) und Randformen (9, 11) bestehenden Werkzeughälften (2, 3) spannrahmenartig mit Schlupfmöglichkeit gehalten wird und
**daß** die Randbereiche (20, 21) von den Randformen (9, 11) ebenso wie die Kernbereiche (22) produktgerecht mit Druck und Wärme fertig geformt werden.

2. Verfahren nach Anspruch 1, **dadurch gekennzeichnet,**
**daß** die Randbereiche (20, 21) bereits vorgeformt werden, wenn sie von den Randformen (9, 11) zunächst mit Schlupf gehalten werden.

3. Verfahren nach Anspruch 1, **gekennzeichnet durch** die Verwendung eines sandwichartigen Rohlings (12), der mindestens eine als Trageschicht dienende Lage (14) umfaßt, die im Ausgangszustand bahn- bzw. mattenförmig ist und zugleich als Schmelzkleber dienende, thermoplastische Kunststoffasern und gegebenenfalls weitere, als Armierung oder Füllstoff dienende Fasern aufweist, und wobei der sandwichartige Rohling (12) auf der als Trageschicht dienenden Lage (13) mindestens eine weitere Lage aufweist.

4. Vorrichtung zum Herstellen von Produkten und Verkleidungsteilen und insbesondere von Innenverkleidungsteilen für Kraftfahrzeuge mit Hilfe von Wärme und Druck aus mindestens zweilagigen, sandwichartigen Rohlingen (12, 12'), die thermoplastisch wirkende Kunststoffasern und als Armierung und/oder Füllstoff dienende Fasern, insbesondere Naturfasern enthalten, wobei mindestens eine erste oder obere Werkzeughälfte (2) und eine zweite, untere Werkzeughälfte (3) jeweils relativ zueinander in einem Maschinengestell unter Verwendung von Antriebselementen (4 - 7) bewegbar und mit einer Steuerungseinrichtung steuerbar sind, **dadurch gekennzeichnet,**
a) **daß** die obere Werkzeughälfte (2) mindestens eine obere Kernform (8) und getrennt davon mindestens eine obere Randform (9) und
b) **daß** die untere Werkzeughälfte (2) eine untere Kernform (10) und getrennt davon mindestens eine untere Randform (11, 11') aufweisen,
c) **daß** die Kernformen (8, 10) einerseits und die Randformen (9, 11) andererseits eigene Antriebselemente (4 - 7) aufweisen,
d) wobei die Ansteuerung der Antriebselemente (4 - 7) derart ist, daß die Kernformen (8, 10) mit ihren Formflächen zum Formen des Kernbereiches (22) des Produktes (24) vorgesehen sind und
e) **daß** die Randformen (9, 11) und die Ansteuerung ihrer Antriebselemente (4, 5) derart sind, daß die Randformen (9, 11) zunächst eine Haltefunktion und zugleich die Schlupffunktion eines Spannrahmens und
f) **daß** die Randformen (9, 11) wenigstens zum Abschluß des Herstellungsvorganges eine Funktion zum Fertigformen der Randbereiche (20, 21) des Produktes (24) haben.

5. Vorrichtung nach Anspruch 4, **dadurch gekennzeichnet,**
**daß** die Randformen (9, 11) zu Beginn des Herstellungsvorganges während ihrer Halte- und Schlupffunktion zugleich aufgrund der Ansteuerung der Antriebselemente (4, 5) eine Funktion zum Vorformen der Randbereiche (20, 21) des Produktes 24 haben.

## Claims

1. Method for the production of products such as lining parts and especially interior lining parts for motor vehicles using heat and pressure, with a multilayer, at least two-layer, sandwich-type blank (12, 12') being deformed with the aid of at least a first or upper tool half (2) and a second or lower tool half (3) that are moved relative to each other in a machine frame by using drive elements (4 - 7) and a control device,
**characterized in that**
at the start of the production process, the sandwich-type blank (12') is held, in a clamping frame fashion that enables slippage, in the edge area (20, 21) of the product (24) by edge moulds (9, 11) of the two tool halves (2, 3) consisting of core moulds (8, 10) and edge molds (9, 11) and
that the edge areas (20, 21) are finally formed by the edge moulds (9, 11) and also by the core areas (22) appropriate to the product, using pressure and heat.

2. Method according to Claim 1, **characterized in that**
the edge areas (20, 21) are already preformed if they are first held, initially with slip, by the edge moulds (9, 11).

3. Method according to Claim 1, **characterized in that** by the use of a sandwich-type blank (12), which includes at least one layer (14) serving as a carrier layer, which in the starting state is in the shape of a sheet or a mat and also has thermoplastic fibers serving as a hot-melt adhesive and, if necessary, further fibers serving as reinforcing or fillers, and with the sandwich-type blank (12) having at least one further layer on the layer (13) serving as a carrier layer.

4. Device for producing products and lining parts and especially inner interior lining parts for motor vehicles, with the help of heat and pressure, from at least two-layer sandwich-type blanks (12, 12') containing thermoplastic-acting plastic fibers and fibers, especially containing natural fibers, serving as reinforcing and/or fillers, with at least one first or upper tool half (2) and a second lower tool half (3) being moveable relative to each other in a machine frame by using drive elements (4 - 7) and being controllable by means of a control device, **characterized in that**
a) the upper tool half (2) has an upper core mould (8) and separate therefrom at least one upper edge mould (9) and
b) the lower tool half (2) has at least one lower core mould (10) and separate therefrom at least one lower edge mould (11, 11'),
c) the core moulds (8, 10) on one hand and the edge moulds (9, 11) on the other hand each have their own drive elements (4 - 7),
d) the control of the drive elements (4 - 7)are such that the core moulds (8, 10) with their mould surfaces for forming the core area (22) of the product (24) are provided and
e) the edge moulds (9, 11) and their control of their drive elements (4, 5) are such that the edge moulds (9, 11) first have a holding function and at the same time a slip function of a clamping frame and
f) the edge moulds (9, 11) have, at least at the completion of the production process, a function for final forming of the edge areas (20, 21) of the product (24).

5. Device according to Claim 4, **characterized in that**
the edge moulds (9, 11) at the beginning of the production process during their holding and slip function have at the same time, due to the control of the drive elements (4, 5), a function for performing the edge areas (20, 21) of the product (24).

## Revendications

1. Procédé de fabrication de produits tels que des pièces d'habillage et notamment des pièces d'habillage intérieur pour véhicules, avec apport de chaleur et de pression, une pièce brute en sandwich (12, 12') multicouche, au minimum bicouche, étant déformée à l'aide d'au moins une première moitié (2) d'outil, ou moitié supérieure, et d'une seconde moitié (3) d'outil, ou moitié inférieure, ces moitiés se déplaçant relativement l'une à l'autre dans un châssis-machine en utilisant des moyens d'entraînement (4 à 7) et un dispositif de commande,
**caractérisé en ce qu'**au
début de la séquence de fabrication, la pièce brute en sandwich (12') est retenue, comme dans un cadre de serrage et tout en pouvant glisser, dans la zone périphérique (20, 21) du produit (24) par les moules périphériques (9, 11) des moitiés d'outil (2, 3) composées de moules centraux (8, 10) et de moules périphériques (9, 11) et
**en ce que** les zones périphériques (20, 21) sont finies de former par les moules périphériques (9, 11) comme les zones centrales (22), de façon adaptée au produit, avec apport de pression et de chaleur.

2. Procédé selon la revendication 1, **caractérisé en ce que**
les zones périphériques (20, 21) sont déjà préformées lorsqu'elles sont retenues, avec glissement dans un premier temps, par les moules périphériques (9, 11).

3. Procédé selon la revendication 1, **caractérisé par** l'utilisation d'une pièce brute en sandwich (12) comprenant au moins une couche (14) servant de couche porteuse se présentant à l'état de départ en forme de bande ou de tapis et en même temps des fibres thermoplastiques en matière synthétique servant de colle fusible, et le cas échéant d'autres fibres servant d'armature ou de matériau de remplissage, et la pièce brute en sandwich (12) présentant au moins une couche supplémentaire sur la couche (13) qui officie de couche porteuse.

4. Procédé de fabrication de produits et pièces d'habillage et notamment de pièces d'habillage intérieur pour véhicules moyennant apport de chaleur et de pression, à partir de pièces brutes en sandwich (12, 12') composées d'au minimum deux couches et contenant des fibres synthétiques à effet thermoplastique et des fibres, naturelles en particulier, servant d'armature et/ou de matière de remplissage, sachant qu'au moins une première moitié d'outil (2), ou moitié supérieure, et une seconde moitié d'outil (3), ou moitié inférieure, sont déplaçables l'une relativement à l'autre dans un châssis machine à l'aide d'éléments d'entraînement (4 à 7) et pilotables à l'aide d'un dispositif de commande, **caractérisé en ce que**
a) la moitié supérieure (2) d'outil présente au moins un moule central supérieur (8) et, séparément de celui-ci, au moins un moule périphérique supérieur (9) et
b) **en ce que** la moitié inférieure d'outil (2) présente un moule central inférieur (10) et, séparément de celui-ci, au moins un moule périphérique inférieur (11, 11'),
c) les moules centraux (8, 10) d'une part et les moules périphériques (9, 11) d'autre part présentent leurs propres éléments d'entraînement (4 à 7),
d) l'excitation des éléments d'entraînement (4 à 7) étant conçue de sorte que les surfaces des moules centraux (8, 10) sont prévues pour mouler la zone centrale (22) du produit (24) et
e) **en ce que** les moules périphériques (9, 11) et l'excitation de leurs éléments d'entraînement (4, 5) ont été conçus de sorte que les moules périphériques (9, 11) remplissent d'abord une fonction de retenue et en même temps la fonction de glissement d'un cadre de serrage et
f) **en ce que** les moules périphériques (9, 11) remplissent, au moins à la fin de la séquence de fabrication, une fonction permettant de conférer leur forme définitive aux zones périphériques (20, 21) du produit (24).

5. Dispositif selon la revendication 4, **caractérisé en ce que**
les moules périphériques (9, 11), au début de la séquence de fabrication, pendant qu'ils accomplissent leur fonction de retenue et de glissement, remplissent en même temps, en raison de l'excitation des éléments d'entraînement (4, 5), une fonction visant à préformer les zones périphériques (20, 21) du produit (24).
